# EUROPEAN PATENT SPECIFICATION

(11) **EP 2 687 584 B1**
(45) Date of publication and mention of the grant of the patent: **09.09.2020**
(21) Application number: 12757356.6
(22) Date of filing: 19.03.2012
(51) Int. Cl.: C10M 169/00, F16C 33/66, C10M 105/18, C10M 115/08, C10M 129/10, C10M 133/12, C10M 135/10, C10M 135/18, C10M 137/10, C10N 10/04, C10N 20/00, C10N 30/06, C10N 30/10, C10N 30/12, C10N 40/02, C10N 50/10, C10M 169/06

(54) **GREASE COMPOSITION**
SCHMIERFETTZUSAMMENSETZUNG
COMPOSITION DE GRAISSE

(30) Priority: 17.03.2011 JP 2011059086
(43) Date of publication of application: 22.01.2014
(73) Proprietor: Kyodo Yushi Co., Ltd., Kanagawa 251-8588 (JP)
(72) Inventor: IMAI Yutaka, Fujisawa-shi, Kanagawa 251-8588 (JP); AIDA Ryo, Fujisawa-shi, Kanagawa 251-8588 (JP)
(74) Representative: Vossius & Partner Patentanwälte Rechtsanwälte mbB
(86) International application number: PCT/JP2012/056988
(87) International publication number: WO 2012/124815

(56) References cited:
- FR-A1- 2 706 169
- JP-A- 5 098 280
- JP-A- 5 194 979
- JP-A- 5 263 091
- JP-A- 8 176 578
- JP-A- 2004 108 403
- JP-A- 2005 290 278
- US-A- 5 301 923
- US-A1- 2004 033 911

## Description

### [Technical Field]

The present invention relates to a grease composition used for rolling bearings of the automotive electrical equipment or automotive auxiliaries.

### [Background Art]

To satisfy the demands on cars for a smaller size and lighter weight on one hand and a larger living space on the other hand, the reduction of space for the engine room has been required, which has led to the reduction in size and weight of the parts in the automotive electrical equipment and automotive auxiliaries, such as alternators, tension pulleys and the like. Also, in response to the demand for quietness, the engine room is closely sealed, so that greases are required to be resistant to high temperatures in consideration of the high-temperature operating environments.

Since the mid-1980s, the conventional V-belts have been replaced by poly-V belts to meet tendencies toward smaller-diameter pulleys and larger transmission torque, and to improve the belt durability. Concurrently, there has occurred a problem of unexpected early flaking associated with formation of white etching area on the rolling surface of the rolling bearing.

The bearings for use in the automotive electrical equipment or automotive auxiliaries have been thus required to have both durability at high temperatures and resistance to flaking caused by hydrogen embrittlement.

Conventionally, lithium soap greases, diurea greases and the like using as the base oil inexpensive mineral oil or synthetic oil are employed for rolling bearings. In particular, the diurea greases using the synthetic oil are frequently chosen for the rolling bearings of the automotive electrical equipment or automotive auxiliaries in light of the durability under high temperatures.

Japanese Patent No. 2979274 proposes a grease composition characterized by comprising a base oil where an ether type synthetic oil is contained in an amount of more than 50 mass%, and a gelling agent as an essential component comprising at least one diurea compound represented by the following general formula:

R²-NHCONH-R¹-NHCONH-R³

wherein R¹ is a bivalent aromatic hydrocarbon group having 6 to 15 carbon atoms; and R² and R³, which may be the same or different represent cyclohexyl group, a cyclohexyl derivative group having 7 to 12 carbon atoms or an alkyl group having 8 to 20 carbon atoms, with the ratio of the cyclohexyl group or the cyclohexyl derivative group as expressed by formula: [((the number of cyclohexyl groups or cyclohexyl derivative groups) / (the number of cyclohexyl groups or cyclohexyl derivative groups + the number of alkyl groups)) x 100] being 50 to 100%.

JP (Hei) 1-268793 A proposes a urea grease characterized in that a urea compound represented by the following formula:

R₁NHCONHR₂NHCONH R₃

(wherein R₁ and R₃ each represent a group comprising octadecyl group as the essential group, and further comprising octyl group and/or dodecyl group, and R₂ is a bivalent hydrocarbon group having 6 to 15 carbon atoms, with the ratio of the octadecyl group existing in the group represented by R₁ and R₃ to the total number of moles of the octadecyl group, octyl group and dodecyl group being 20 to 80 mol%) is contained as the thickener in a lubricating oil (base oil) in an amount of 3 to 15 mass%.

However, the urea greases prepared from cyclohexylamine and alkylamine as the monoamine components are unfavorable in terms of the durability at high temperatures when compared with the urea greases from aromatic amines as the monoamine components.

Conventionally, in the field of rolling bearings for automotive electrical equipment or automotive auxiliaries, hydrogen embrittlement in the bearing has become a problem, and this problem has been handled by improving the properties of grease to be employed. For example, addition of an oxidizer for passivation to the grease is proposed in order to inhibit a catalytic action on the metal surface newly exposed as a result of the wear (e.g., as in JP (Hei) 3-210394 A). According to the above-mentioned proposal, the metal surface is oxidized to inhibit the catalytic action thereof, thereby preventing the generation of hydrogen that would be caused by decomposition of the lubricant. Also, use of a phenyl ether type synthetic oil as the base oil for grease is proposed to prevent the generation of hydrogen caused by decomposition of the lubricant (e.g., as in JP (Hei) 3-250094 A). Further, it is proposed that azo compounds capable of absorbing hydrogen be added to the grease used for metal materials required to have tribological properties and for a variety of members, in particular, to the grease to be filled into the bearing used at a portion subject to entry of water (e.g., as in JP 2002-130301 A). In addition, a grease composition comprising a fluorinated polymer oil as the base oil, polytetrafluoroethylene as the thickener, and an electroconductive material is proposed for the purpose of extending the life of rolling bearings, without causing the hydrogen embrittlement-induced flaking even when water permeates through the bearing (e.g., as in JP 2002-250351 A).

However, any of the above-mentioned proposals are not sufficient measures to cope with the hydrogen embrittlement because those proposals are not intended to cope with the action after generation of hydrogen, in other words, to prevent the permeation of hydrogen into the inside of metal.

US 5,301,923 discloses a grease composition containing a base oil in the form of a mixture of an alkyldiphenyl ether oil and a poly-α-olefin oil.

### [Summary of Invention]

### [Technical Problem]

An object of the invention is to provide a grease composition to be enclosed in the rolling bearings for automotive electrical equipment or automotive auxiliaries, which is capable of extending the bearing lubrication life even at elevated temperatures and exhibiting excellent resistance to hydrogen embrittlement-induced flaking.

Another object of the invention is to provide a rolling bearing in which the above-mentioned grease composition is enclosed.

### [Solution to Problem]

The inventors of the invention have successfully solved the problems of the bearing lubrication life at elevated temperatures and the resistance to hydrogen embrittlement-induced flaking by choosing a proper base oil, thickener and additives. Namely, the invention provides a grease composition as defined in the appended claims.

### [Advantageous Effects of Invention]

The grease composition of the invention can extend the bearing lubrication life even at elevated temperatures and exhibit excellent resistance to hydrogen embrittlement-induced flaking.

### [Description of Embodiments]

### (Thickener)

As the thickener the diurea compounds represented by the following formula (1) are employed.

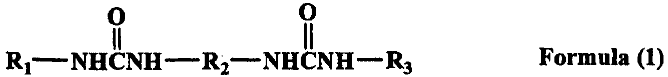

In the formula, R² is a diphenylmethane group; and R¹ and R³, which may be the same or different represent an aromatic hydrocarbon group having 6 to 12 carbon atoms. Specific examples of R¹ and R³ include aniline, benzylamine, toluidine, chloroaniline, and the like. In particular, toluidine is preferred.

Addition of the thickener represented by formula (1) to the base oil can render excellent heat resistance even at elevated temperatures to a grease composition.

The above-mentioned thickener can be obtained by reacting a monoamine with a diisocyanate at 10 to 150°C, for example. The reaction method mentioned above is not particularly limited, and any conventional methods can be used. Any volatile solvent may be used in the above-mentioned reaction. When a base oil is used as the solvent, that solvent can be incorporated into the resultant composition of the invention as it is. Specifically, diphenylmethane-4,4'-diisocyanate can be used as the isocyanate component, for example.

The content of the above-mentioned thickener in the composition of the invention is in the range of 15 to 25 mass% from the viewpoint of the resistance to grease leakage.

In general, metallic soaps containing lithium, sodium or the like, and non-soaps such as Benton, silica gel, diurea compounds, fluorine-containing thickeners such as polytetrafluoroethylene and the like are considered to be usable as the thickeners for grease. However, the metallic soaps, Benton and silica gel are not satisfactory in terms of the heat resistance, that is, the bearing lubrication life is insufficient at high temperatures. The fluorine-containing thickeners are considerably expensive and lacking in versatility although the heat resistance is satisfactory.

### (Base oil)

The base oil comprises as an essential component an alkyldiphenyl ether oil that is excellent in heat resistance at high temperatures. The alkyl group may be a branched or straight-chain group, with the latter being preferable. The alkyl group may preferably have 10 to 20 carbon atoms, more preferably 12 to 14 carbon atoms. One kind of alkyldiphenyl ether oil may be used alone, or two or more kinds may be used in combination.

When the alkyldiphenyl ether oil is used in combination with other base oil component, the kind of other base oil component is not particularly limited. For example, ester type synthetic oils such as diester oils and polyol ester oils, synthetic hydrocarbon oils such as poly α-olefin oils and polybutene, silicone type synthetic oils, and fluorinated synthetic oils may be used.

When the alkyldiphenyl ether oil is used in combination with other base oil component, the content of the alkyldiphenyl ether oil in the base oil is not particularly limited, but may preferably be 50 mass% or more, based on the total mass of the base oil in consideration of the heat resistance.

There is no restriction on the kinematic viscosity of the base oil at 40°C, but preferably, the kinematic viscosity thereof may be 30 to 300 mm²/s, more preferably 50 to 200 mm²/s and most preferably 50 to 150 mm²/s.

When the kinematic viscosity of the base oil exceeds 300 mm²/s at 40°C, the low-temperature flowability will be unsatisfactory. The base oil with a kinematic viscosity of less than 30 mm²/s at 40°C tends to easily evaporate and show poor heat resistance.

### (Additives)

The grease composition of the invention essentially comprises as the anti-flaking additive an organic sulfonate rust inhibitor and a load carrying additive. By using those additives in combination, it becomes possible to extend the anti-flaking life even under the severe lubrication conditions.

As the organic sulfonate rust inhibitor, the compounds represented by the following formula (2) are disclosed herein

[R⁴-SO₃]nM --- (2)

In the above formula, R⁴ is an alkyl group, alkenyl group, alkylnaphthyl group, dialkylnaphthyl group, alkylphenyl group or residual group of high-boiling petroleum fraction. The above-mentioned alkyl group or alkenyl group is a straight-chain or branched group having 2 to 22 carbon atoms. R⁴ may preferably be a dialkylnaphthyl group where an alkyl group has 6 to 18 carbon atoms, more preferably 8 to 12 carbon atoms, and most preferably nine carbon atoms.

M is an alkali metal, alkaline earth metal, zinc or ammonium ion. In particular, M is preferably an alkaline earth metal or zinc. Of the alkaline earth metals, calcium is preferable.

In the formula, n is a valence number of M.

Preferably, the disclosed organic sulfonate rust inhibitor may be at least one selected from the group consisting of zinc salts and calcium salts. In the present invention zinc dinonylnaphthalenesulfonate and/or calcium dinonylnaphthalenesulfonate are used as the organic sulfonate rust inhibitor.

The content of the organic sulfonate rust inhibitor in the grease composition according to the invention is 0.2 to 5 mass%.

According to the present disclosure, as the load carrying additive, thiocarbamates such as zinc dialkyldithiocarbamate (ZnDTP) and the like, thiophosphates such as zinc dialkyldithiophosphate and the like, naphthenates such as zinc naphthenate, calcium naphthenate and the like, carboxylates such as zinc alkylcarboxylate and the like, organic phosphate esters such as trioctyl phosphate, triphenylphosphorothionate and the like may be used.

The disclosed load carrying additive may preferably be at least one selected from the group consisting of thiocarbamates, thiophosphates, naphthenates, carboxylates and organic phosphate esters. In the present invention, the load carrying additive is selected from the group consisting of thiocarbamates and thiophosphates.

The load carrying additive can be an alkali metal salt, alkaline earth metal salt, zinc salt or ammonium salt. Particularly, the zinc salt is preferable.

In particular, the load carrying additive may more preferably be zinc thiocarbamate or zinc thiophosphate, and most preferably zinc dialkyldithiocarbamate or zinc dialkyldithiophosphate.

The content of the load carrying additive in the grease composition according to the invention is 0.2 to 5 mass%.

The content of the anti-flaking additive in the grease composition according to the invention may preferably be 0.2 to 10 mass%, and more preferably 0.2 to 8 mass%.

When necessary, the grease composition of the invention may further comprise any additives. For example, antioxidants of amine type and/or phenol type are used. In particular, primary antioxidants of amine type and phenol type antioxidants are preferable. Those antioxidants may be used in combination rather than alone in consideration of the utilization of grease over a wide temperature range. The content of the amine type antioxidant is

0.5 to 4 mass%, based on the total mass of the grease composition according to the invention. Likewise, the content of the phenol type antioxidant is 0.5 to 4 mass%. When amine type and phenol type antioxidants are used in combination, the total content may preferably be 0.5 to 6 mass%, and more preferably 1 to 5 mass%.

Examples of other additives include other antioxidants than amine type and phenol type antioxidants, such as quinoline type antioxidants and the like; an inorganic passivator such as sodium nitrite or the like; other rust inhibitors than the above-mentioned organic sulfonate rust inhibitors, such as amine-based and carboxylate-based rust inhibitors; a metallic corrosion inhibitor such as benzotriazole or the like, an oiliness improver such as fatty acids, fatty acid esters, phosphates and the like; phosphorus-containing, sulfur-containing or organic metal-containing antiwear agent and extreme-pressure agent except the above-mentioned load carrying agent; and a solid lubricant such as oxidized metal salts, molybdenum disulfide or the like. The contents of those optional additives may generally be 0.5 to 5 mass% based on the total mass of the grease composition according to the invention.

The worked penetration of the composition according to the invention, which may appropriately be adjusted is preferably 200 to 400, and more preferably 250 to 350.

Examples of the rolling bearings for the automotive electrical equipment or automotive auxiliaries where the grease composition of the invention can be used are those of alternators, electromagnetic clutches for car's air conditioners, intermediate pulleys, idler pulleys, tension pulleys and the like.

### Examples

### <Examples>

### Preparation of Sample Grease Compositions

In each base oil shown below, diphenylmethane diisocyanate (1 mole) was reacted with a monoamine (cyclohexylamine, octylamine or p-toluidine) and the reaction mixture was heated and then cooled, thereby obtaining a base grease. The additives shown below and the base oil were added to the base grease, and mixed with a three-roll mill to have a worked penetration of 350. Thus, the grease compositions were obtained in Examples 1 to 6 and Comparative Examples 1 to 8.

### [Base oil]

### - Alkyldiphenyl ether oil

Alkyl(C12-14) diphenyl ether oil: having a kinematic viscosity at 40°C of 97 mm²/s

### - Polyol ester oil

Dipentaerythritol ester oil: having a kinematic viscosity at 40°C of 76.9 mm²/s

### - Synthetic hydrocarbon oil

Poly(α-olefin) oil: having a kinematic viscosity at 40°C of 68.0 mm²/s

### [Anti-flaking additive]

### <Rust inhibitor>

### - Zn sulfonate

Zn salt of dinonylnaphthalene sulfonate

### - Ca sulfonate

Ca salt of dinonylnaphthalene sulfonate

### <Load carrying additive>

### - ZnDTP

Zinc dialkyldithiophosphate

### - ZnDTC

Zinc dialkyldithiocarbamate

### <Antioxidant>

### -Amine type antioxidant

Alkyldiphenylamine

### -Phenol type antioxidant

Hindered phenol

### <Test Methods>

### (1) Bearing lubrication life test (in accordance with ASTM D3336)

This test was conducted by rotating the inner ring of a bearing to evaluate the bearing lubrication life at elevated temperatures. The rolling bearing was operated under the following conditions. When the motor causes overcurrent of 4A or the bearing temperature increases by 15°C, the lubricating life was considered to expire. The results are shown in Tables 1 and 2.
Bearing type: 6204 metal sealed bearing
Testing temperature: 180°C
The number of rotations: 10,000 rpm
Test load: axial load 66.7 N
radial load 66.7 N

### (2) Test using four rolling steel balls

### Outline of the test

Three steel balls with a diameter of 15 mm designed for bearings were disposed in a container with an inner diameter of 40 mm and a height of 14 mm, which was filled with about 20 g of a test grease composition. Another steel ball (5/8-in) for bearing was placed in contact with the top of the three steel balls.

The upper ball was rotated for 4 hours for shakedown under application of a load, and then hydrogen gas was introduced into the test part. By rotating the upper ball at a predetermined number of revolutions, the lower three balls revolved as each rotating on its axis. The balls were made to rotate continuously until the flaking took place on the steel ball surfaces. The flaking life was expressed as the total number of contact times of the upper ball with the lower balls counted when the flaking took place. The flaking occurred at a point between the balls having the highest contact pressure.

The above-mentioned test was conducted using the grease compositions obtained in Examples and Comparative Examples as the test greases.

The results are shown in Tables 1 and 2.

### Test Conditions

Steel balls for test: 5/8-in steel ball for bearing (rotary ball) and 15-mm-dia. steel balls (follower balls)
Load for test: 100 kgf (4.1 GPa)
Rotational speed: 1500 rpm
Feed rate of hydrogen gas: 15 ml/min.
Purity of hydrogen: 99.99%
Atmospheric pressure at test part: 0.96 atm. (because of vacuum extraction)
The repeated number of tests: 5 (average life: obtained by n=5)

### Evaluation

Bearing lubrication life test:
400 hours or more: o (acceptable)
less than 400 hours: x (unacceptable)

Test using four rolling steel balls:
20 x 10⁶ times or more: o (acceptable)
less than 20 x 10⁶ times: x (unacceptable)

### Overall Evaluations

Acceptable in both the bearing lubrication life test and the four rolling steel ball test: o (acceptable)
Unacceptable in either the bearing lubrication life test or the four rolling steel ball test: x (unacceptable)

**[Table 1]**

| | | | | Ex. 1 | Ex. 2 | Ex. 3 | Ex. 4 | Ex. 5 | Ex. 6 |
|---|---|---|---|---|---|---|---|---|---|
| Thickener (Molar ratio of isocyanate to amine) | | Diphenylmethane diisocyanate | | 1 | 1 | 1 | 1 | 1 | 1 |
| | | Monoamine | p-toluidine | 2 | 2 | 2 | 2 | 2 | 2 |
| | | | Cyclohexylamine | - | - | - | - | - | - |
| | | | Octylamine | - | - | - | - | - | - |
| Base oil (mass ratio based on total mass of base oil) | | Alkyldiphenyl ether oil | | 100 | 50 | 50 | 100 | 100 | 100 |
| | | Polyol ester oil | | - | 50 | - | - | - | - |
| | | Synthetic hydrocarbon oil | | - | - | 50 | - | - | - |
| Anti-flaking additive | Rust inhibitor | Zn sulfonate | | 2.0 | 2.0 | 2.0 | 2.0 | - | - |
| | | Ca sulfonate | | - | - | - | - | 2.0 | 2.0 |
| | Load carrying additive | ZnDTP | | 1.0 | 1.0 | 1.0 | - | 1.0 | - |
| | | ZnDTC | | - | - | - | 1.0 | - | 1.0 |
| Antioxidant | | Amine type | | 2.0 | 2.0 | 2.0 | 2.0 | 2.0 | 2.0 |
| | | Phenol type | | 1.0 | 1.0 | 1.0 | 1.0 | 1.0 | 1.0 |
| Worked penetration | | | | 350 | 350 | 350 | 350 | 350 | 350 |
| Bearing lubrication life test | | Life (hour) | | 400< | 400< | 400< | 400< | 400< | 400< |
| | | Evaluation | | o | o | o | o | o | o |
| Test using four rolling steel balls | | No. of contact times L50 (x10 times) | | 20< | 20< | 20< | 20< | 20< | 20< |
| | | Evaluation | | o | o | o | o | o | o |
| Overall evaluations | | | | o | o | o | o | o | o |

**[Table 2]**

| | | | | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|---|---|---|---|
| Thickener (Molar ratio of isocyanate to amine) | | Diphenylmethane diisocyanate | | 1 | 1 | 1 | 1 | 1 | 1 | 1 | 1 |
| | | Monoamine | p-toluidine | - | - | 2 | 2 | 2 | 2 | 2 | 2 |
| | | | Cyclohexylamine | 2 | - | - | - | - | - | - | - |
| | | | Octylamine | - | 2 | - | - | - | - | - | - |
| Base oil (mass ratio based on total mass of base oil) | | Alkyldiphenyl ether oil | | 100 | 100 | - | - | 100 | 100 | 100 | 100 |
| | | Polyol ester oil | | - | - | 100 | - | - | - | - | - |
| | | Synthetic hydrocarbon oil | | - | - | - | 100 | - | - | - | - |
| Anti-flaking additive | Rust inhibitor | Zn sulfonate | | 2.0 | 2.0 | 2.0 | 2.0 | 2.0 | - | - | - |
| | | Ca sulfonate | | - | - | - | - | - | 2.0 | - | - |
| | Load carrying additive | ZnDTP | | 1.0 | 1.0 | 1.0 | 1.0 | - | - | 2.0 | - |
| | | ZnDTC | | - | - | - | - | - | - | - | 2.0 |
| Antioxidant | | Amine type | | 2.0 | 2.0 | 2.0 | 2.0 | 2.0 | 2.0 | 2.0 | 2.0 |
| | | Phenol type | | 1.0 | 1.0 | 1.0 | 1.0 | 1.0 | 1.0 | 1.0 | 1.0 |
| Worked penetration | | | | 350 | 350 | 350 | 350 | 350 | 350 | 350 | 350 |
| Bearing lubrication life test | | Life (hour) | | 250 | 210 | 280 | 190 | 400< | 400< | 400< | 400< |
| | | Evaluation | | x | x | x | x | o | o | o | o |
| Test using four rolling steel balls | | No. of contact times L50 (x10⁶ times) | | 20< | 20< | 20< | 20< | 9.8 | 10.8 | 10.2 | 10.5 |
| | | Evaluation | | o | o | o | o | x | x | x | x |
| Overall evaluations | | | | x | x | x | x | x | x | x | x |

The grease compositions of Examples 1 to 6 where the thickener is an aromatic diurea compound (prepared from diphenylmethane diisocyanate and p-toluidine), the base oil comprises alkyldiphenyl ether oil, and the predetermined additives are added are acceptable both in the bearing lubrication test and the test using four rolling steel balls.

In contrast to this, the grease compositions of Comparative Examples 1 to 8 where any of the above-mentioned components is not contained are unacceptable in the bearing lubrication test or the test using four rolling steel balls.

## Claims

1. A grease composition for rolling bearings of automotive electrical equipment or automotive auxiliaries, comprising:
a base oil that comprises as an essential component an alkyldiphenyl ether oil;
as a thickener, 15 to 25 mass% of a diurea compound represented by the following formula (1): 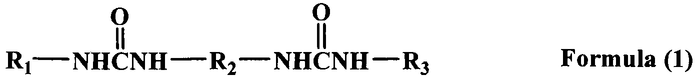
wherein R² is a diphenylmethane group; and R¹ and R³, which may be the same or different represent an aromatic hydrocarbon group having 6 to 12 carbon atoms; and
as an anti-flaking additive, 0.2 to 5 mass % of an organic sulfonate rust inhibitor and 0.2 to 5 mass% of a load carrying additive, the organic sulfonate rust inhibitor being at least one selected from the group consisting of zinc dinonylnaphthalenesulfonate and calcium dinonylnaphthalenesulfonate, and the load carrying additive being at least one selected from the group consisting of thiocarbamates and thiophosphates; and
0.5 to 4 mass% of an amine type antioxidant and/or 0.5 to 4 mass% of a phenol type antioxidant, and
wherein all mass percents are based on the total mass of the grease composition.

2. The grease composition of claim 1, wherein the load carrying additive is at least one selected from the group consisting of zinc dialkyldithiocarbamate and zinc dialkyldithiophosphate.

3. The grease composition of any one of claims 1 to 2, further comprising an amine type antioxidant and a phenol type antioxidant as antioxidants.

4. A rolling bearing for automotive electrical equipment or automotive auxiliaries, wherein the grease composition of any one of claims 1 to 3 is enclosed.

## Patentansprüche

1. Eine Schmierfettzusammensetzung für Wälzlager von elektrischer Automobilausrüstung oder Automobilzubehör, umfassend:
ein Basisöl, das als einen wesentlichen Bestandteil ein Alkyldiphenyletheröl umfasst;
als ein Verdickungsmittel, 15 bis 25 Massen-% einer Diharnstoffverbindung, dargestellt durch die nachstehende Formel (1): 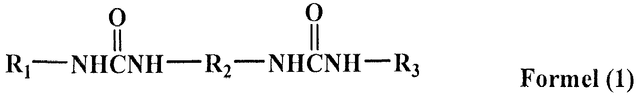
wobei R² eine Diphenylmethangruppe ist; und R¹ und R³, die gleich oder verschieden sein können, für einen aromatischen Kohlenwasserstoffrest mit 6 bis 12 Kohlenstoffatomen stehen; und
als ein Anti-Flake-Additiv, 0,2 bis 5 Massen-% eines organischen Sulfonat-Rostinhibitors und 0,2 bis 5 Massen-% ein Tragfähigkeitsadditivs, wobei der organische Sulfonat-Rostinhibitor mindestens eines, ausgewählt aus der Gruppe bestehend aus Zinkdinonylnaphthalensulfonat und Calciumdinonylnaphthalensulfonat, ist und das Tragfähigkeitsadditiv mindestens eines, ausgewählt aus der Gruppe bestehend aus Thiocarbamaten und Thiophosphaten, ist; und
0,5 bis 4 Massen-% eines Antioxidationsmittels vom Amin-Typ und/oder 0,5 bis 4 Massen-% eines Antioxidationsmittels vom Phenol-Typ, und
wobei alle Massenprozente auf die Gesamtmasse der Schmierfettzusammensetzung bezogen sind.

2. Die Schmierfettzusammensetzung nach Anspruch 1, wobei das Tragfähigkeitsadditiv mindestens eines, ausgewählt aus der Gruppe bestehend aus Zinkdialkyldithiocarbamat und Zinkdialkyldithiophosphat, ist.

3. Die Schmierfettzusammensetzung nach einem der Ansprüche 1 bis 2, ferner umfassend ein Antioxidationsmittel vom Amin-Typ und ein Antioxidationsmittel vom Phenol-Typ als Antioxidationsmittel.

4. Ein Wälzlager für elektrische Automobilausrüstung oder Automobilzubehör, wobei die Schmierfettzusammensetzung nach einem der Ansprüche 1 bis 3 enthalten ist.

## Revendications

1. Composition de graisse pour roulements d'équipements électriques automobiles ou d'auxiliaires automobiles, comprenant :
une huile de base qui comprend, en tant que composant essentiel, une huile alkyldiphényl éther ;
en tant qu'épaississant, 15 à 25 % en masse d'un composant de diurée représenté par la formule (1) suivante : 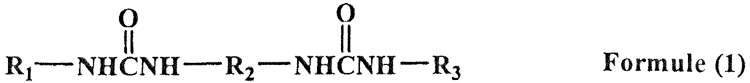
dans laquelle R² est un groupe diphénylméthane ; et R¹ et R³, qui peuvent être identiques ou différents, représentent un groupe d'hydrocarbures aromatiques ayant 6 à 12 atomes de carbone ; et, en tant qu'additif anti-écaillage, 0,2 à 5 % en masse d'un antirouille à sulfonate organique et 0,2 à 5 % en masse d'un additif porteur de charge, l'antirouille à sulfonate organique étant au moins l'un sélectionné dans le groupe constitué de zinc dinonylnaphtalènesulfonate et calcium dinonylnaphtalènesulfonate, et l'additif porteur de charge étant au moins l'un sélectionné dans le groupe constitué de thiocarbamates et thiophosphates ; et
0,5 à 4 % en masse d'un antioxydant de type amine et/ou 0,5 à 4 % en masse d'un antioxydant de type phénol, et dans laquelle tous les pourcentages en masse sont basés sur la masse totale de la composition de graisse.

2. Composition de graisse selon la revendication 1, dans laquelle l'additif porteur de charge est au moins l'un sélectionné dans le groupe constitué de zinc dialkyldithiocarbamate et zinc dialkyldithiophosphate.

3. Composition de graisse selon l'une quelconque des revendications 1 à 2, comprenant en outre un antioxydant de type amine et un antioxydant de type phénol en tant qu'antioxydants.

4. Roulement pour équipements électriques automobiles ou auxiliaires automobiles, dans lequel la composition de graisse selon l'une quelconque des revendications 1 à 3 est contenue.
